# EUROPÄISCHE PATENTSCHRIFT

(11) **EP 0 326 662 B1**
(45) Veröffentlichungstag und Bekanntmachung des Hinweises auf die Patenterteilung: **31.03.1993**
(21) Anmeldenummer: 88118711.6
(22) Anmeldetag: 10.11.1988
(51) Int. Cl.: C01B 3/38

(54) **Mehrstufiges Verfahren zur Erzeugung von wasserstoff- und kohlenmonoxidhaltigen Synthesegasen**
Multi-step process for the production of synthesis gases containing hydrogen and carbon monoxide
Procédé à plusieurs étapes de production de gaz de synthèse contenant de l'hydrogène et de l'oxyde de carbone

(30) Priorität: 03.02.1988 DE 3803082
(43) Veröffentlichungstag der Anmeldung: 09.08.1989
(73) Patentinhaber: Uhde GmbH, 44141 Dortmund (DE)
(72) Erfinder: Herbort, Hans-Joachim, Dipl.-Ing., D-5758 Fröndenberg (DE); Peters, Claus, Dipl.-Ing., D-4630 Bochum (DE); Heun, Reinhard, Dipl.-Ing., D-5804 Herdecke (DE)
(74) Vertreter: Patentanwälte Meinke, Dabringhaus und Partner

(56) Entgegenhaltungen:
- EP-A- 0 242 199
- EP-A- 0 271 299
- GB-A- 2 153 382

## Beschreibung

Die Erfindung richtet sich auf ein mehrstufiges Verfahren zur Erzeugung von H₂- und CO-haltigen Synthesegasen aus kohlenwasserstoffhaltigen Einsatzstoffen, bei dem (a) die Einsatzstoffe zunächst einer katalytischen Primärdampfreformierung, (b) anschließend einer partiellen Oxidation mit Hilfe eines sauerstoffhaltigen Zusatzstoffes und (c) anschließend einer weiteren endothermen katalytischen Dampfreformierung unterworfen werden und (d) wobei nachfolgend ein Wärmeaustausch zwischen dem die zweite Reformierung verlassenden und wenigstens teilweise dem den Primärkatalysator durchströmenden Gas durchgeführt wird.

Reaktoren, die derartige Verfahrensweisen möglich machen, zeigen z.B. US-PS 4 650 651 oder 3 549 335 oder die EP-A-0 242 199. Bei der US-PS 4 650 651 wird in den Reaktor von unten das kohlenwasserstoffhaltige Einsatzgas eingebracht, es durchströmt einen Primärreformer, wird dann über ein Zentralrohr in die Spitze eines Sekundärreformers in einen Reaktionsraum verbracht, reagiert dort z.B. mit eingebrachter Luft, durchströmt nach unten den Sekundärreformer und umströmt auf seinem weiteren Weg nach unten den Primärreformer, um dann den Reaktor zu verlassen. Die Temperaturbereiche sind dabei so gewählt, daß die Temperaturen nach Verlassen der zweiten Reformierung noch vergleichsweise hoch sind, die Temperaturen liegen im Bereich zwischen 900 bis über 1100°C, dieser Wärmeinhalt wird dann beim Umströmen des Primärreformers wenigstens teilweise abgegeben. Diese hohen Temperaturen werden im wesentlichen deswegen eingehalten, weil sie für die Einstellung des Restmethangehaltes des Produktgases als bestimmt angesehen werden und um eine Rückbildung von Methan bei einer Kühlung der Spaltprodukte am Katalysator zu verhindern.

Aufgabe der Erfindung ist die Schaffung einer Lösung, mit der insbesondere in spezifisch kleinerem umbauten Raum energetisch optimale Werte erreichbar sind, wobei die Ausbeute des Verfahrens den herkömmlichen Verfahrensweisen in nichts nachsteht.

Diese Aufgabe wird gemäß der Erfindung dadurch gelöst, daß die katalytische Primärreformierung in zwei Teilzonen durchgeführt wird und daß die Kühlung des zur sekundären, endothermen Dampfreformierung eingesetzten Sekundärkatalysators von der zweiten Teilzone der Primärdampfreformierungsstufe in der Weise durchgeführt wird, daß das den Sekundärkatalysator verlassende Gas eine Temperatur im Bereich von 650 bis 850^{°}C aufweist.

Es hat sich gezeigt, daß die Aufrechterhaltung der in der Literatur beschriebenen hohen Temperaturen in bzw. bis hinter den Sekundärkatalysator keinesfalls notwendig ist, vielmehr können durch eine gezielte Kühlung des Katalysatorbettes die Reformierungsreaktionen beeinflußt werden, z.B.:

CH₄ + H₂O → 3 H₂ + CO

Mit der Erfindung werden eine Reihe von zusätzlichen Vorteilen erzielt, so kann das erforderliche Gesamtvolumen eines entsprechenden Reaktors verringert werden, durch niedrige Temperaturen können günstigere Werkstoffe eingesetzt werden und dgl. mehr.

In Ausgestaltung sieht die Erfindung vor, daß die sekundäre endotherme Dampfreformierung und die zusätzliche Kühlung des Gases am Sekundärkatalysator im wesentlichen gleichzeitig durchgeführt werden, wobei in weiterer Ausgestaltung vorgesehen sein kann, daß zur Kühlung des Gases am Sekundärkatalysator wenigstens einer derjenigen Medienströme herangezogen wird, der der partiellen Oxidationsstufe zugeführt wird.

Beide oben genannten Maßnahmen führen zur Optimierung des Verfahrens, insbesondere aber zu der Möglichkeit, besonders kleine Reaktoren bauen zu können, da hier ansonsten im Stand der Technik separat vorgesehene Räume durch die gemischte Nutzung innerhalb einer Stufe entfallen oder sich im Volumen verringern. Auch kann das Katalysatorvolumen reduziert werden.

Die Erfindung sieht auch vor, daß zur Kühlung des Gases am Sekundärkatalysator wenigstens ein Teil des den Primärkatalysator durchströmenden Mediums herangezogen wird.

Eine besondere Ausgestaltung der Erfindung besteht darin, daß die Kühlung des Gases am Sekundärkatalysator derart vorgenommen wird, daß die Austrittstemperatur des Produktgases wenigstens 50°C, vorzugsweise 100 - 250°C, unterhalb der thermodynamischen Gleichgewichtstemperatur für das Methangleichgewicht des austretenden Gases liegt.

Der oben bereits angegebene Gleichgewichtstemperaturbereich zwischen etwa 900°C bis 1100°C wird somit ganz erheblich unterschritten, was zu den bereits genannten Vorteilen, insbesondere auf der Werkstoffseite führt.

In weiterer Ausgestaltung der erfindungsgemäßen Verfahrensweise ist vorgesehen, daß ein Teil des kohlenwasserstoffhaltigen Einsatzgases unter Umgehung der ersten katalytischen Reformerstufe direkt der Oxidationsstufe zugeführt wird, wobei vorgesehen sein kann, daß das den Primärkatalysator durchströmende Gas einerseits und das der Oxidationsstufe direkt zugeführte Medium andererseits unterschiedliche Zusammensetzung aufweisen.

Zur weiteren Beeinflussung des Verfahrens, insbesondere zur Produktgassteuerung, womit dessen Zusammensetzung und Qualität gemeint ist, sieht die Erfindung auch vor, daß das dem System zugeführte CO₂ dem Produktgas selbst und/oder einer davon getrennten CO₂-Quelle entnommen wird und/oder daß wenigstens ein Teilstrom des der Oxidationsstufe zugeführten Oxidationsmittels zur Kühlung des den Sekundärkatalysator durchströmenden Gases herangezogen wird.

Zur weiteren Optimierung der Gaszusammensetzung kann vorgesehen sein, daß im Bereich des Sekundärkatalysators unterschiedliche Katalysatorarten und/oder unterschiedliche Porösität und/oder Änderung der Strömungsgeschwindigkeiten im Katalysator vorgesehen werden.

Erkennbar ist es durch die Erfindung möglich, den Wärmeaustauscher mit dem Gas in der primären Reformierungszone parallel zur Sekundärrefomierung ablaufen zu lassen, wobei der Wärmeaustausch teilweise auf deutlich höherem Temperaturniveau und bei besseren Temperaturdifferenzen durchgeführt werden kann, verglichen mit der bekannten Prozeßführung, bei der der Wärmeaustausch erst nach Gasaustritt aus dem Sekundärkatalysator beginnt.

Je nach Wahl der Katalysatorparameter kann neben den bekannten Reformierungsreaktionen auch eine ausgeprägte Konvertierungsteilreaktion vorliegen:

CO + H₂O → H₂ + CO₂ (exotherm)

Erkennbar wird durch den Wärmeaustausch zwischen Sekundärkatalysator und Primärrefomierung die Primärreformierung bei höherem Temperaturniveau geführt und damit verbessert.

Die Erfindung ist nachfolgend anhand von Zeichnungen näher erläutert, diese zeigt in
Fig. 1 ein Verfahrensablauf in schematischer Darstellung,
Fig. 2 eine abgewandelte Prozeßführung sowie in
Fig. 3 einen vereinfachten Schnitt durch einen Reaktor.

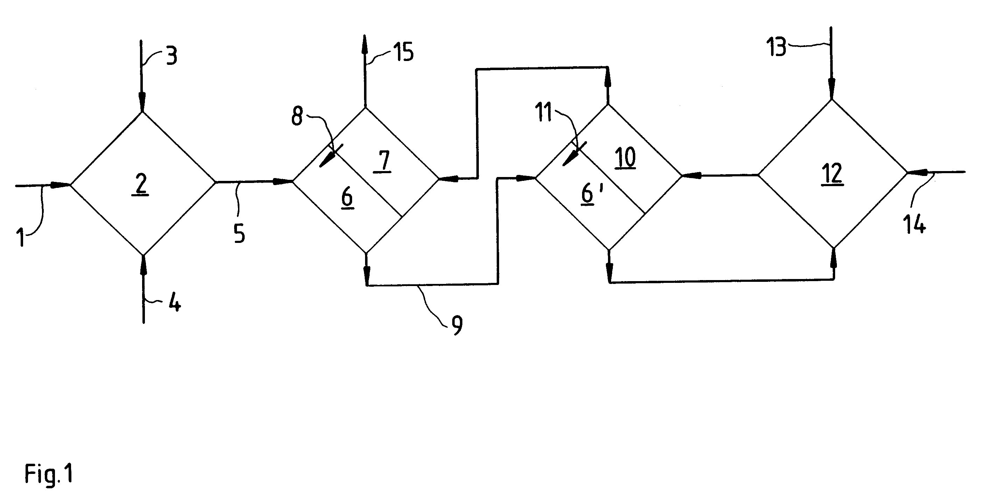

Bezugnehmend auf Fig. 1 wird von links bei 1 Kohlenwasserstoffhaltiges Medium dem Prozeß zugeführt, wobei mit dem Bezugszeichen 2 ein Mischer und/oder Befeuchter angedeutet ist. Über eine Leitung 3 wird Wasser, z.B. in Dampfform, zugeführt, von unten über die Leitung 4 kann, wenn dies nützlich sein sollte, N₂ bzw. CO₂ zugeführt werden.

Das Medium wird dann über 5 einem Primärreformer 6 zugeführt, der im Wärmeaustausch mit einem Wärmeaustauscherteil 7 steht, was durch den kleinen Pfeil 8 angedeutet ist.

Im dargestellten Beispiel ist der Primärreformer in zwei Teilbereichen oder Zonen dargestellt, die mit 9 bezeichnete Verbindungsleitung ist symbolischer Natur und verbindet den ersten Teil des Primärreformers 6 mit dem zweiten Teil 6′, der im Wärmeaustausch mit einer Sekundärreformierung 10 steht. Dieser Wärmeaustausch ist auch durch einen kleinen Pfeil, mit 11 bezeichnet, angedeutet.

Das den Primärreformer verlassende Medium wird einer partiellen Oxidation im Anlageteil 12 zugeführt, wobei in Fig. 1 von oben ein Oxidationsmittel über die Leitung 13 zugeführt wird, etwa O₂. Es kann sich hierbei aber auch zusätzlich um andere zuzuführende Medien handeln, etwa N₂, CO₂ oder H₂O. Über eine Leitung 14 kann alternativ ein sekundärer kohlenwasserstoffhaltiger Teilstrom dem Prozeß zugeführt werden.

Es war schon erwähnt worden, daß das Medium dem Sekundärreformer 10 zugeführt wird, und zwar nach Verlassen der partiellen Oxidationsstufe 12. Das Produktgas tritt dann in den Wärmeaustausch über den Wärmeaustauscherteil 7 mit der ersten Stufe des Primärreformers 6 und verläßt zur weiteren Behandlung den Prozeß, was durch den Pfeil 15 angedeutet ist.

Nachfolgend seien einige typische Verfahrensdaten angegeben:

### Typische Verfahrensdaten: (bevorzugt)

- Druck 0 - 100 bar (40-50)
- Temperatur des primär eintretenden KWST/Dampfgemisches 250 - 550°C (330-370)
- Temperatur des aus dem Primärteil austretenden Gases 650 - 850°C (720-750)
- Wasserdampf/Kohlenstoff Verhältnis am Eintritt in den Primärteil 1,6 - 4 (molar) (2,2-2,7)
- Sekundäre KWST-Einsatzmenge bezogen auf die gesamte Einsatzmenge 0 - 50 %
- Temperatur des sekundären KWST Einsatzgases 300 - 430°C
- Temperatur des sauerstoffhaltigen Gases 50 - 800°C
- Sauerstoff/Gesamtkohlenstoff-Verhältnis 0,3 - 0,55 (molar)
- Temperatur am Ausgang der partiellen Oxidation 950 - 1180°C (1050-1080)
- Methangehalt am Eintritt in den sekundären Katalysator 3 - 10 % Vol (trockenes Gas) (5-7)
- Temperatur am Austritt aus Sekundärkatalysator 650 - 850°C (680 - 750°C)
- Methangehalt am Austritt aus Sekundärkatalysator 0,1 - 2,5 % Vol (trockenes Gas)
- Temperatur Austritt WAT - Strecke (Reaktor) 300 - 550°C (420-450)

### Typische Gasqualitäten:

- H₂/CO Verhältnis 1 : 1 - 6 : 1

### Katalysatoren:

### a) erste Dampfreformierungsstufe

- Nickelkatalysatoren auf Aluminiumoxidträger, (z.B.) oder
- bereichsweise Nickelkatalysatoren auf Zinkoxidbasis, um den Reaktionsbeginn zu tieferen Temperaturen hin zu verlagern (das verbessert den Wärmeübergang)

### b) zweite Dampfreformierungsstufe

- Katalysatoren auf Basis
   Nickel oder
   Platin oder
   Rhodium oder evtl.
   Lithium oder
   Paladium

bevorzugt auf Aluminiumoxidträgern.

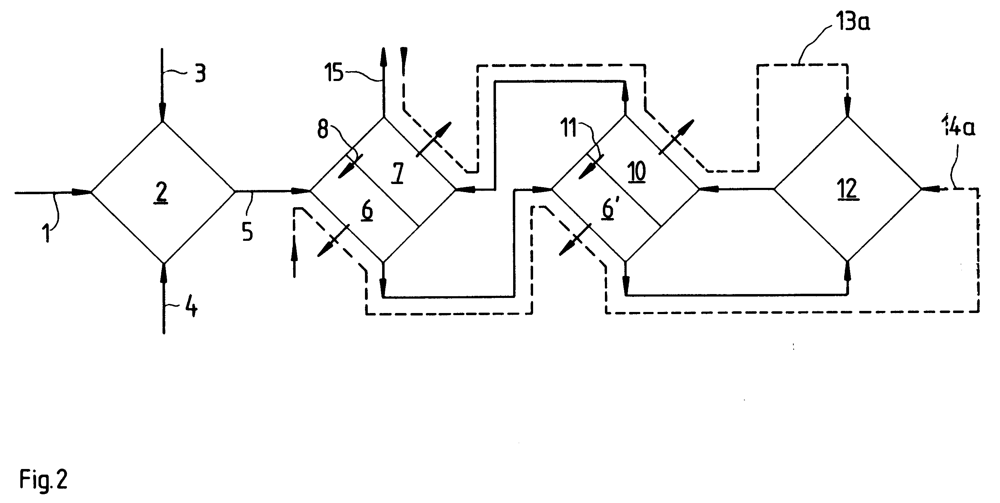

Fig. 2 zeigt die Möglichkeit einer Verfahrensführung, die in Fig. 1 mit 13 und 14 bezeichneten Teilströme mit vorzuwärmen. Soweit gleiche Verhältnisse wie in Fig. 1 vorliegen, benutzt Fig. 2 die gleichen Ziffern, die Teilströme 13 und 14 sind lediglich mit 13a und 14a bezeichnet.

Die Einführung von CO₂ in den Prozeß kann dann besonders nützlich sein, wenn das Synthesegas ein geringes H₂/CO-Verhältnis aufweisen soll, z.B. für die Synthese von Alkoholen oder für die Synthese von leichteren bis mittleren Kohlenwasserstoffen.

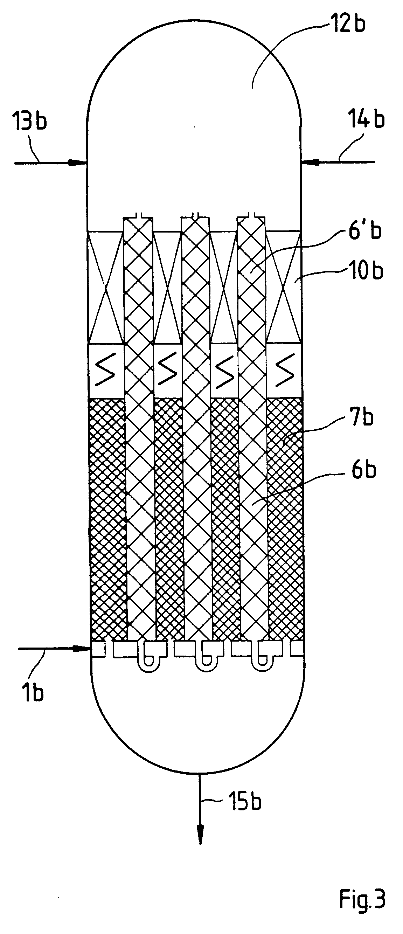

In Fig. 3 ist eine mögliche Bauart eines Reaktors dargestellt, wobei die in Fig. 1 bzw. 2 benutzten Bezugszeichen dort soweit wie möglich ebenfalls mit verwendet worden sind unter Hinzufügung des Buchstabens "b".

## Patentansprüche

1. Mehrstufiges Verfahren zur Erzeugung von H₂- und CO-haltigen Synthesegasen aus kohlenwasserstoffhaltigen Einsatzstoffen, bei dem (a) die Einsatzstoffe zunächst einer katalytischen Primärdampfreformierung, (b) anschließend einer partiellen Oxidation mit Hilfe eines sauerstoffhaltigen Zusatzstoffes und (c) anschließend einer weiteren endothermen katalytischen Dampfreformierung unterworfen werden und (d) wobei nachfolgend ein Wärmeaustausch zwischen dem die zweite Reformierung verlassenden und wenigstens teilweise dem den Primärkatalysator durchströmenden Gas durchgeführt wird,
dadurch gekennzeichnet,
daß die katalytische Primärreformierung in zwei Teilzonen (6 u. 6') durchgeführt wird und daß die Kühlung des zur sekundären, endothermen Dampfreformierung eingesetzten Sekundärkatalysators (10) von der zweiten Teilzone (6') der Primärdampfreformierungsstufe in der Weise durchgeführt wird, daß das den Sekundärkatalysator verlassende Gas eine Temperatur im Bereich von 650 bis 850°C aufweist.

2. Mehrstufiges Verfahren nach Anspruch 1,
dadurch gekennzeichnet,
daß die sekundäre endotherme Dampfreformierung und die zusätzliche Kühlung des Gases am Sekundärkatalysator im wesentlichen gleichzeitig durchgeführt wird.

3. Mehrstufiges Verfahren nach Anspruch 1 oder 2,
dadurch gekennzeichnet,
daß zur Kühlung des Gases am Sekundärkatalysator wenigstens einer derjenigen Medienströme herangezogen wird, der der partiellen Oxidationsstufe zugeführt wird.

4. Mehrstufiges Verfahren nach einem der vorangehenden Ansprüche,
dadurch gekennzeichnet,
daß zur Kühlung des Gases am Sekundärkatalysator wenigstens ein Teil des den Primärkatalysator durchströmenden Mediums herangezogen wird.

5. Mehrstufiges Verfahren nach einem der vorangehenden Ansprüche,
dadurch gekennzeichnet,
daß die Kühlung des Gases am Sekundärkatalysator derart vorgenommen wird, daß die Austrittstemperatur des Produktgases wenigstens 50°C, vorzugsweise 100 - 250°C, unterhalb der thermodynamischen Gleichgewichtstemperatur für das Methangleichgewicht des austretenden Gases liegt.

6. Mehrstufiges Verfahren nach einem der vorangehenden Ansprüche,
dadurch gekennzeichnet,
daß ein Teil des kohlenwasserstoffhaltigen Einsatzgases unter Umgehung der ersten katalytischen Reformerstufe direkt der Oxidationsstufe zugeführt wird.

7. Mehrstufiges Verfahren nach einem der vorangehenden Ansprüche,
dadurch gekennzeichnet,
daß das den Primärkatalysator durchströmende Gas einerseits und das der Oxidationsstufe direkt zugeführte Medium andererseits unterschiedliche Zusammensetzung aufweisen.

8. Mehrstufiges Verfahren nach einem der vorangehenden Ansprüche,
dadurch gekennzeichnet,
daß zur Produktgassteuerung das dem System zugeführte CO₂ dem Produktgas selbst und/oder einer davon getrennten CO₂-Quelle entnommen wird.

9. Mehrstufiges Verfahren nach einem der vorangehenden Ansprüche,
dadurch gekennzeichnet,
daß wenigstens ein Teilstrom des der Oxidationsstufe zugeführten Oxidationsmittels zur Kühlung des den Sekundärkatalysator beströmenden Gases herangezogen wird.

10. Mehrstufiges Verfahren nach einem der vorangehenden Ansprüche,
dadurch gekennzeichnet,
daß zur Optimierung der Gaszusammensetzung im Bereich des Sekundärkatalysators unterschiedliche Katalysatorarten und/oder unterschiedliche Porösität und/oder Änderung der Strömungsgeschwindigkeiten im Katalysator vorgesehen werden.

## Claims

1. A multi-stage process for the production of H₂- and CO-bearing synthesis gases from hydrocarbon-bearing charge materials, wherein (a) the charge materials are firstly subjected to a catalytic primary steam reforming operation, (b) then a partial oxidation operation by means of an oxygen-bearing additive and (c) then a further endothermic catalytic steam reforming operation and (d) wherein subsequently heat exchange is effected between the gas leaving the second reforming operation and at least in part the gas flowing through the primary catalyst,
characterised in that
the catalytic primary reforming operation is carried out in two sub-zones (6 and 6') and that cooling of the secondary catalyst (10) which is used for the secondary endothermic steam reforming operation is carried out by the second sub-zone (6') of the primary steam reforming stage in such a way that the gas leaving the secondary catalyst is at a temperature in the range of from 650 to 850°C.

2. A multi-stage process according to claim 1 characterised in that the secondary endothermic steam reforming operation and the additional cooling of the gas at the secondary catalyst are effected substantially simultaneously.

3. A multi-stage process according to claim 1 or claim 2 characterised in that at least one of those flows of medium which is fed to the partial oxidation stage is utilised for cooling the gas at the secondary catalyst.

4. A multi-stage process according to one of the preceding claims characterised in that at least a portion of the medium which flows through the primary catalyst is utilised for cooling the gas at the secondary catalyst.

5. A multi-stage process according to one of the preceding claims characterised in that cooling of the gas at the secondary catalyst is effected in such a way that the discharge temperature of the product gas is at least 50°C and preferably from 100 to 250°C below the thermodynamic equilibrium temperature for the methane equilibrium of the issuing gas.

6. A multi-stage process according to one of the preceding claims characterised in that a portion of the hydrocarbon-bearing charge gas is fed directly to the oxidation stage, by-passing the first catalytic reforming stage.

7. A multi-stage process according to one of the preceding claims characterised in that the gas which flows through the primary catalyst on the one hand and the medium which is fed directly to the oxidation stage on the other hand are of different compositions.

8. A multi-stage process according to one of the preceding claims characterised in that the CO₂ which is fed to the system is taken from the product gas itself and/or a CO₂-source which is separate therefrom, for the purposes of product gas control.

9. A multi-stage process according to one of the preceding claims characterised in that at least a flow portion of the oxidation agent which is fed to the oxidation stage is used for cooling the gas flowing over the secondary catalyst.

10. A multi-stage process according to one of the preceding claims characterised in that different catalyst types and/or different porosity and/or a change in the flow speeds in the catalyst are provided for optimisation of the gas composition in the region of the secondary catalyst.

## Revendications

1. Procédé de préparation en plusieurs étapes de gaz de synthèse contenant H₂ et CO à partir de charges hydrocarbonées, selon lequel (a) on soumet d'abord les charges à un reformage à la vapeur catalytique primaire, (b) ensuite à une oxydation partielle à l'aide d'un additif oxygéné puis (c) à un autre reformage à la vapeur catalytique endothermique pendant que (d) on effectue à la suite un échange de chaleur entre le gaz quittant le deuxième reformage et au moins une partie du gaz qui passe sur le premier catalyseur, caractérisé en ce que le reformage catalytique primaire est effectué dans deux zones partielles (6 et 6') et en ce que le refroidissement du catalyseur secondaire (10) utilisé pour le reformage à la vapeur secondaire endothermique est effectué par la seconde zone partielle (6') de l'étape de reformage à la vapeur primaire de façon que le gaz quittant le catalyseur secondaire présente une température comprise entre 650 et 850°C.

2. Procédé en plusieurs étapes selon la revendication 1, caractérisé en ce que le reformage à la vapeur endothermique secondaire et le refroidissement additionnel du gaz sur le catalyseur secondaire sont effectués de façon essentiellement simultanée.

3. Procédé en plusieurs étapes selon la revendication 1 ou 2, caractérisé en ce que, pour le refroidissement du gaz sur le catalyseur secondaire, on utilise au moins l'un des courants de milieux qui sont introduits dans l'étape d'oxydation partielle.

4. Procédé en plusieurs étapes selon l'une des revendications précédentes, caractérisé en ce que, pour le refroidissement du gaz sur le catalyseur secondaire, on utilise au moins une partie du milieu qui traverse le catalyseur primaire.

5. Procédé en plusieurs étapes selon l'une des revendications précédentes, caractérisé en ce qu'on effectue le refroidissement du gaz sur le catalyseur secondaire de façon que la température de sortie du gaz produit soit inférieure d'au moins 50°C, de préférence de 100-250°C, à la température d'équilibre thermodynamique pour l'équilibre de méthane du gaz sortant.

6. Procédé en plusieurs étapes selon l'une des revendications précédentes, caractérisé en ce qu'une partie du gaz de charge contenant des hydrocarbures est introduit directement dans l'étape d'oxydation en évitant la première étape de reformage catalytique.

7. Procédé en plusieurs étapes selon l'une des revendications précédentes, caractérisé en ce que le gaz qui traverse le catalyseur primaire d'une part, et le milieu introduit directement dans l'étape d'oxydation d'autre part, présentent une composition différente.

8. Procédé en plusieurs étapes selon l'une des revendications précédentes, caractérisé en ce que, pour la régulation du gaz produit, on prélève le CO₂ introduit dans le système du gaz produit lui-même et/ou d'une source de CO₂ qui en est distincte.

9. Procédé en plusieurs étapes selon l'une des revendications précédentes, caractérisé en ce qu'on utilise au moins un courant partiel de l'agent d'oxydation introduit dans l'étape d'oxydation pour refroidir le gaz qui passe sur le catalyseur secondaire.

10. Procédé en plusieurs étapes selon l'une des revendications précédentes, caractérisé en ce que, pour l'optimisation de la composition gazeuse, on prévoit au niveau du catalyseur secondaire différents types de catalyseurs et/ou différentes porosités et/ou la variation des débits dans le catalyseur.
